(19) 

**Europäisches Patentamt**
**European Patent Office**
**Office européen des brevets**

(11) **EP 4 417 668 B1**

(12) **EUROPEAN PATENT SPECIFICATION**

(45) Date of publication and mention
of the grant of the patent:
**15.04.2026  Bulletin 2026/16**

(21) Application number: **22886134.0**

(22) Date of filing: **28.10.2022**

(51) International Patent Classification (IPC):
*C09K 8/508* (2006.01)    *C09K 8/514* (2006.01)
*C09K 8/88* (2006.01)    *C09K 8/90* (2006.01)
*C09K 8/035* (2006.01)

(52) Cooperative Patent Classification (CPC):
**C09K 8/514; C09K 8/035; C09K 8/508;**
**C09K 8/5086; C09K 8/88; C09K 8/90;** Y02W 30/91

(86) International application number:
**PCT/CN2022/128316**

(87) International publication number:
**WO 2023/072259 (04.05.2023 Gazette 2023/18)**

(54) **COMPOSITE MATERIAL, COMPOSITION, DRILLING FLUID, AND METHOD FOR PLUGGING FORMATION WELL WALL FRACTURES**

VERBUNDMATERIAL, ZUSAMMENSETZUNG, BOHRFLÜSSIGKEIT UND VERFAHREN ZUM ABDICHTEN VON BOHRLOCHWANDFRAKTUREN

MATÉRIAU COMPOSITE, COMPOSITION, FLUIDE DE FORAGE ET PROCÉDÉ D'OBTURATION DE FRACTURES DE PAROI DE PUITS DE FORMATION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **01.11.2021  CN 202111284866**

(43) Date of publication of application:
**21.08.2024  Bulletin 2024/34**

(73) Proprietors:
• **China Petroleum & Chemical Corporation**
**Beijing 100728 (CN)**
• **Sinopec Petroleum Engineering Technology Research**
**Institute Co., Ltd**
**Beijing 102206 (CN)**

(72) Inventors:
• **ZENG, Yijin**
**Beijing 102206 (CN)**
• **KONG, Yong**
**Beijing 102206 (CN)**

• **LI, Daqi**
**Beijing 102206 (CN)**
• **JIN, Junbin**
**Beijing 102206 (CN)**
• **YANG, Xiaohua**
**Beijing 102206 (CN)**
• **YANG, Fan**
**Beijing 102206 (CN)**
• **CHU, Qi**
**Beijing 102206 (CN)**

(74) Representative: **Hoffmann Eitle**
**Patent- und Rechtsanwälte PartmbB**
**Arabellastraße 30**
**81925 München (DE)**

(56) References cited:
CN-A- 106 947 438    CN-A- 106 947 439
CN-A- 106 947 439    CN-A- 107 312 508
CN-A- 108 728 064    CN-A- 109 776 727
CN-A- 110 387 221    CN-A- 111 139 040
CN-A- 111 139 040    CN-A- 114 085 656
GB-A- 1 392 391    RU-C2- 2 179 567
US-A1- 2011 028 354    US-A1- 2013 180 713

## Description

### CROSS REFERENCE TO RELATED APPLICATIONS

This application claims the rights of the Chinese patent application No. 202111284866.6 filed on November 1, 2021.

### FIELD

The present disclosure relates to the technical field of drilling, in particular to a composite material, a composition, a drilling fluid, and a method of plugging formation well wall fracture.

### BACKGROUND

With the development of oil exploration to deep formation and the acceleration of shale gas exploration, drilling formation conditions are becoming more and more complex, and a problem of well wall instability in a complex formation is becoming increasingly prominent. A problem of well wall stability is a very complex problem often encountered in drilling engineering. With expansion of an exploration field to a deep formation, a drilling formation is increasingly complex, and well wall instability has become an obstacle to achieving an exploration objective. Main manifestations of well wall instability are hole shrinkage, well wall collapse, borehole enlargement, sticking, a blockage during electronic logging, and the like. These accidents not only reduce a drilling speed, prolong a well construction period, increase operating cost, reduce cementing quality, and cause a series of problems, but also make it impossible for some areas to drill to a target layer, delay drilling and development opportunities, and affect economic benefits. The well wall instability causes huge economic losses to the petroleum industry every year, and it is still a very important and thorny problem to this day. With the increasingly complex drilling formation conditions, the demand for a high-performance anti-collapse agent in petroleum exploration and development is increasing. For the problem of well wall instability, the prior art mainly focuses on improving inhibition and plugging performance of a drilling fluid, and improving well wall stability through physical and chemical methods.

Due to unique physical and chemical properties, an aluminum compound may undergo morphological changes of different pH values, thereby weakening shale expansion, and plugging a pore throat and a micro-fracture through electrical neutralization, ion adsorption and chemical precipitation. Research and application of an aluminum-based drilling fluid anti-collapse treatment agent have become one of hotspots in the field of drilling fluid research. The existing aluminum-based treatment agent mainly includes inorganic salts such as $AlCl_3 \cdot 6H_2O$, $Al_2(SO_4)_3 \cdot 18H_2O$, $KAl(SO_4)_2 \cdot 12H_2O$ and $NaAlO_2$, as well as some aluminum-based drilling fluid treatment agent products. For example, CN106947439A discloses a pH responsive drilling fluid aluminum-based anti-collapse agent and a preparation method thereof. The pH responsive drilling fluid aluminum-based anti-collapse agent prepared by a reaction of polyether polyol, a lactone monomer, an initiator, an aluminum compound and a pH regulator has pH responsiveness, exists stably in a dissolved form in a drilling fluid (pH>8), can quickly respond to form aluminum hydroxide precipitation within a pH response range ($5 \leq pH \leq 7.5$), and plugs a formation pore throat and a micro-fracture through physical and chemical effects.

However, when applying the aluminum-based anti-collapse agent, it is necessary to drill into the formation with a pH≤7.5, so as to use properties of the aluminum compound to undergo a chemical reaction and then plug the formation micro-fracture, and its using amount is generally higher than 10wt% of the drilling fluid, resulting in low plugging efficiency.

An existing well wall stabilizing material lacks the capability of identifying and selecting effects on a complex underground formation, and has a large using amount and insufficient plugging capability. Therefore, the development of a well wall stabilizing material that may actively identify a formation environment fracture, quickly plug the same, and quickly match needs of complex formations with well wall instability and has a small using amount, is of great significance for effective prevention and rapid treatment of the complex underground formation.

CN 106 947 439 A relates to a pH-responsive drilling fluid aluminum-based anti-sloughing agent and a preparation method thereof.

### SUMMARY

The present disclosure aims to overcome the above problems existing in a well wall stabilizing material in the prior art, and provides a composite material, a composition, a drilling fluid, and a method of plugging formation well wall fracture. The composite material can quickly identify and respond to pH of the external environment, and can achieve active identification and rapid plugging of the fracture in a small amount.

In order to achieve the above objective, a first aspect of the present disclosure provides a composite material including a polymer matrix and metal ions embedded in the polymer matrix, an embedding rate of the metal ions is not less than 90wt%, and turbidity of an aqueous solution of the composite material with a concentration ranging from 0.1wt% to 10wt% is not less than 1000 NTU under a condition of pH≤8, wherein the polymer matrix is selected from at least two of a polysaccharide substance, a cryptand compound and polyether polyol, and the metal ions are selected from at least two of aluminum ions, iron ions, titanium ions and zirconium ions.

A second aspect of the present disclosure provides a composition including the composite material described in the first aspect and oil-soluble resin.

A third aspect of the present disclosure provides a drilling fluid including the composite material described in the first aspect or the composition described in the second aspect of the present disclosure.

A fourth aspect of the present disclosure provides a method of plugging formation well wall fracture including: feeding the drilling fluid described in the third aspect of the present disclosure into a formation in a drilling process, so that the drilling fluid penetrates into the formation well wall fracture and plugs the formation well wall fracture.

In the composite material provided by the present disclosure, because the embedding rate of the metal ions is not less than 90wt%, the composite material can actively and quickly identify changes in a formation environment and respond to them when being fed into the formation as the drilling fluid without damaging performance of the drilling fluid. When the drilling fluid makes contact with a formation well wall fracture with a lower pH to result in the drilling fluid pH≤8, morphology of the polymer matrix changes, the metal ions embedded in the polymer matrix are released to form precipitate to plug the well wall fracture in the formation environment, thereby achieving a precise response and precise matching with the formation well wall fracture environment. A small amount of the composite material can effectively increase a plugging rate of the formation well wall fracture. In addition, the composite material provided by the present disclosure can reform an embedding structure under a condition of pH>8 after the metal ions are released, and can release the metal ions again when being placed under the condition of pH≤8 again, so that the composite material of the present disclosure can be recycled and has high cycling stability.

The drilling fluid provided by the present disclosure can achieve the precise response and precise matching with the formation well wall fracture environment due to the presence of the above composite material or above composition, and a small amount of composite material or a small amount of composition can effectively increase the plugging rate of the formation well wall fracture.

The plugging method provided by the present disclosure can achieve the precise response and precise matching with the formation well wall fracture environment by using the above drilling fluid, and a small amount of composite material or a small amount of composition can effectively increase the plugging rate of the formation well wall fracture.

## BRIEF DESCRIPTION OF DRAWINGS

Fig. 1 is an infrared spectrogram of a well wall stabilizing material A1 prepared in Example 1 of the present disclosure.

Fig. 2 is a TG phase diagram of a heat stability test of a well wall stabilizing material A1 prepared in Example 1 of the present disclosure.

Fig. 3 is a DSC phase diagram of a heat stability test of a well wall stabilizing material A1 prepared in Example 1 of the present disclosure.

Fig. 4 is a test diagram of response of a well wall stabilizing material A1 prepared in Example 1 of the present disclosure to pH.

Fig. 5 is an analysis diagram of a particle size change in a process of response of a well wall stabilizing material A1 prepared in Example 1 of the present disclosure to pH.

Fig. 6 is a scanning electron micrograph of a filter cake formed on a surface of a rock sample after performing a plugging evaluation experiment by using a drilling fluid containing a well wall stabilizing material A1(a) prepared in Example 1 and a drilling fluid not containing a well wall stabilizing material (b) prepared in an Example.

Fig. 7 is a cyclic stability result diagram of a response of a well wall stabilizing material A1 prepared in Example 1 of the present disclosure to pH.

Fig. 8 is a curve graph of a filtration loss change of a well wall stabilizing material prepared in Example 1 of the present disclosure in a plugging evaluation experiment.

## DETAILED DESCRIPTION

The preferred implementations of the present disclosure will be described in more detail below. These implementations are provided to make the present disclosure more thorough and complete and to completely convey the scope of the present disclosure to those skilled in the art.

For numerical ranges, the endpoint values of each range, the endpoint values of each range and an individual point value, as well as individual point values, may be combined to obtain one or more new numerical ranges. These numerical ranges should be considered specifically disclosed herein.

A first aspect of the present disclosure provides a composite material including a polymer matrix and metal ions embedded in the polymer matrix, an embedding rate of the metal ions is not less than 90wt%, and turbidity of an aqueous solution of the composite material with a concentration ranging from 0.1wt% to 10wt% is not less than 1000 NTU under a condition of pH≤8, wherein the polymer matrix is selected from at least two of a polysaccharide substance, a cryptand compound and polyether polyol, and the metal ions are selected from at least two of aluminum ions, iron ions, titanium ions and zirconium ions.

In the present disclosure, the turbidity of the aqueous solution is measured by a high-range turbidimeter SH50/HZX4000, wherein turbidity of an aqueous solution of a composite material with a concentration ranging from 0.1wt% to 10wt% is not less than 1000 NTU under a condition of pH≤8. When the concentration of the aqueous solution of the composite material is less than 0. 1wt%, a turbidity change of the aqueous solution is not significant, and the turbidity is not greater than 3 NTU. When the concentration of the aqueous solution of the composite material is greater than 10wt%, the composite material cannot be completely dissolved in water and remains in a turbid state at pH>8, which partially limits effective application of the composite material.

In the present disclosure, the turbidity of the aqueous solution of the composite material is not less than 1000 NTU under the condition of pH≤8, which means that the turbidity of the 0.1wt%-10wt% aqueous solution of the composite material is less than 1000 NTU when the pH is greater than 8, and is in a clear state. When the pH is 8, the aqueous solution of the composite material becomes turbid, and the turbidity is not less than 1000 NTU. As acidity of the solution further increases, the turbidity is further improved.

In the present disclosure, the embedding rate of the metal ions is obtained by first using an X-ray photoelectron spectroscopy (XPS) method to measure a weight $M_1$ of the metal ions at 0 nm-3 nm on a surface of the polymer matrix, then measuring a total weight $M_0$ of the metal ions in the composite material by an inductively coupled plasma spectrometer (ICP), and then performing calculation according to a formula: embedding rate=$(M_0-M_1)/M_0 \times 100\%$.

In the present disclosure, a testing method of the XPS is as follows: testing is performed on an ESCALab250 type X-ray photoelectron spectrometer equipped with Thermo Avantage V5.926 software, an excitation source is a monochromatic Al KαX-ray, energy is 1486.6 eV, power is 150 W, transmittance energy used by narrow scanning is 30 eV, basic vacuum during analysis and testing is $6.53 \times 10^{-9}$ mbar, electron binding energy is corrected with a C1s peak (284.6 eV) of simple substance carbon, data processing is performed on Thermo Avantage software, and quantitative analysis is performed in an analysis module by using a sensitivity factor method to obtain a metal ion weight at 0 nm-3 nm on the surface.

An ICP testing method is as follows: 10 g of composite material sample is taken, 100 mL of concentrated hydrochloric acid is added to dissolve the sample completely, deionized water is used to make the same be at a constant volume of 500 mL solution, and an ICP-OES 5100 type spectrum emission instrument is used for detection.

The present disclosure utilizes the polymer matrix to embed the metal ions, which can achieve the better result. An inventor found that when the embedding rate of the metal ions is not less than 90wt%, it can avoid early reaction of the metal ions with a drilling fluid and improve plugging efficiency during application.

Preferably, when the embedding rate of the metal ions is not less than 95wt%, the plugging efficiency can be further improved.

More preferably, when the embedding rate of the metal ions ranges from 98wt% to 100wt%, the composite material can have a higher plugging rate and using stability.

According to the present disclosure, solubility of the composite material in water is not less than 0.1 g/100g, and preferably, solubility of the composite material in water ranges from 0.1 g/100g to 10 g/100g.

In the present disclosure, the solubility of the composite material in water refers to a maximum mass that can be achieved when a solution is clear after the composite material is added to 100 g of water at normal temperature and pressure and dissolved, in g/100g.

In the present disclosure, clear means that an average particle size Z-Average (d.nm) of solid particles in the aqueous solution containing the composite material measured by a Malvern highly-sensitive nanoparticle size analyzer is less than 1000 nm, and the turbidity is not greater than 3 NTU at this time. Correspondingly, when the average particle size Z-Average (d.nm) of the solid particles in the aqueous solution containing the composite material measured by the Malvern highly-sensitive nanoparticle size analyzer is not less than 1000 nm, preferably not less than 1500 nm, the solution is in a turbid state.

According to the composite material of the present disclosure, under a condition that pH of the aqueous solution of the composite material with the concentration ranging from 0.1wt% to 10wt% is adjusted from 9 to 8, the turbidity of the aqueous solution of the composite material is not less than 1000 NTU, and the average particle size of the solid particles in the aqueous solution increases by from 20% to 60%.

According to the composite material of the present disclosure, under a condition that the pH of the aqueous solution of the composite material with the concentration ranging from 0.1wt% to 10wt% is adjusted from 8 to 6, the turbidity of the aqueous solution of the composite material is not less than 2000 NTU, and the average particle size of the solid particles in the aqueous solution increases by from 200% to 300%.

In the present disclosure, under the condition that the pH of the aqueous solution of the composite material ranges from 8 to 6, the aqueous solution is in the turbid state, wherein the average particle size of the solid particles ranges from 1000 nm to 3000 nm.

In the present disclosure, the average particle size of the solid particles in the aqueous solution increases by from 20% to 60%, which refers to a growth rate of the average particle size of the solid particles when pH=8 compared to the particle size of the composite material when pH=9; and the average particle size of the solid particles increases by from 200% to 300%, which refers to a growth rate of the average particle size of the solid particles when pH=6 compared to the average particle size of the solid particles when pH=8.

The response change of the particle size of the composite material to pH may be proved by the following methods: the composite material is prepared as 1wt% aqueous solution, a pH meter is used to monitor a pH value change of the solution in real time, and a Malvern highly-sensitive nanoparticle size analyzer (Zetasizer Nano S90) is used to monitor the particle size change of the composite material in the process of pH response.

Specifically, taking a composite material A1 prepared in Example 1 as an example, a 1wt% dilute hydrochloric acid solution is dropwise dropped into an aqueous solution containing the composite material A1 at a concentration of 1wt%. A state of the aqueous solution is observed, and when the solution begins to become turbid, it is regarded that the composite material A1 begins to respond. Through pH detection of the aqueous solution by the Malvern highly-sensitive nanoparticle size analyzer and by monitoring the solid particles in the aqueous solution through a high-range turbidity analyzer, it can be seen that when pH=9, the turbidity of the aqueous solution is 3 NTU, and the average particle size of the solid particles is 624.1 nm; when pH=8, the aqueous solution is turbid, the turbidity is 1080 NTU, and the average particle size of the solid particles is 794.7 nm; when pH=7.5, the turbidity of the aqueous solution is 2100 NTU, and the average particle size of the solid particles is 1836 nm; and when pH=7, the turbidity of the aqueous solution is 3790 NTU, and the average particle size of the solid particles is 2030 nm. It can be seen that the average particle size of the solid particles in the aqueous solution increases with the decrease of pH, and the turbidity of the aqueous solution gradually increases.

Theoretical speculation suggests that turbidity is caused by the formation of metal ion clusters due to the perception of pH value changes by the metal ions, and such metal ion clusters have good sizes and are a key and stable intermediate for formation restoration. The metal clusters can achieve directional transformation, induced fracture deposition, bonding and agglomeration on the surface of the formation well wall fracture through surface complexation, sweeping and capture, charge neutralization/adsorption coagulation and other effects with residues between the formation well wall fractures, thereby actively plugging the formation micro-fracture.

According to the present disclosure, the metal ions and the polymer matrix are connected by a coordination bond or by coordination bond and molecular recognition.

In the present disclosure, it is detected by a Fourier transform infrared spectrometer with a model of Nicolet 5DX (potassium bromide pellet technique) that the metal ions and the polymer matrix are connected by the coordination bond or by coordination bond and molecular recognition. The inventor found through research that the metal ions are connected with the polymer matrix through coordination and/or molecular recognition, which can realize directional release of the metal ions from the polymer matrix, thus significantly increasing the plugging rate.

According to the present disclosure, it is measured through thermogravimetric and synchronous thermal analyzer (TGA/DSC1) that a thermal decomposition temperature of the composite material is not less than 150°C, preferably not less than 180°C.

According to some implementations of the present disclosure, a content of the metal ions is in a range from 20wt% to 80wt%, preferably from 40wt% to 75wt%, of the composite material, for example, 40wt%, 43wt%, 45wt%, 50wt%, 55wt%, 58wt%, 60wt%, 63wt%, 65wt%, 68wt%, 70wt%, 73wt% and 75wt%.

According to the present disclosure, the polymer matrix is selected from at least two of a polysaccharide substance, a cryptand compound, or polyether polyol. The inventor of the present disclosure found through research that when the polymer matrix is selected from at least two of the above, it can be more convenient to fully embed all metal ions of different sizes and particle sizes. Furthermore, the inventor of the present disclosure found that the polymer matrix of the above type contains carboxyl, hydroxyl, carbonyl, ether, or amino and other groups and can form strong coordination with the metal ions, while a drilling fluid environment is usually alkaline, and pH is generally 8-10 or above, which is conducive to stable existence of coordination between the metal ions and the above groups. The formation well wall fracture will cause a pH value of the drilling fluid to drop below 8, generally in a range from 6 to 8, which will significantly weaken a coordination capability of the above groups with the metal ions, so that the metal ions are released from the polymer matrix, to coordinate with a hydroxide radical in water, and form precipitation to achieve efficient plugging of the formation well wall fracture.

According to a preferable implementation of the present disclosure, the polymer matrix is selected from at least one of a cryptand compound, a polysaccharide substance, and polyether polyol. In the polymer matrix, a weight ratio of cryptand to polyether polyol to polysaccharide substance is 1:(0.2-1.2):(0.2-1.2).

According to some implementations of the present disclosure, the polysaccharide substance is selected from modified starch and/or modified cellulose.

Preferably, the polysaccharide substance is selected from at least one of pregelatinized starch, oxidized starch, carboxymethyl starch, carboxypropyl starch, dextrin, sodium carboxymethyl cellulose, nano cellulose, polyanionic cellulose (PAC), hydroxyethyl methyl cellulose, ethyl cellulose, benzyl cellulose, hydroxyethyl cellulose, hydroxypropyl methyl cellulose, cyanoethyl cellulose, benzyl cyanoethyl cellulose, carboxymethyl hydroxyethyl cellulose and benzyl cellulose.

According to some implementations of the present disclosure, the cryptand compound is selected from at least one of crown ether, cyclodextrin and calixarene.

Preferably, the cryptand compound is selected from 14-crown-4, 15-crown-5, 18-crown-6, dicyclohexano-18-crown(ether)-6, 21-crown-7, 24-crown-8, 30-crown-10, benzo-15-crown-5, dibenzo-18-crown-6, $\alpha$-cyclodextrin, $\beta$-cyclo-dextrin, $\gamma$-cyclodextrin, calix[4]arene, calix[6]arene and calix[8]arene.

According to some implementations of the present disclosure, a number average molecular weight of the polyether polyol ranges from 200 to 100000, preferably, ranges from 1000 to 100000.

According to some implementations of the present disclosure, the polyether polyol is selected from at least one of polyethylene glycol, polypropylene glycol, tetrahydrofuranoxide propylene copolymer glycol, trimethylolpropane polyether, polypropylene oxide glycol, polyoxypropylene triol, and polytetrahydrofuran glycol.

According to the present disclosure, the metal ions are selected from at least two of aluminum ions, iron ions, titanium ions, or zirconium ions. The inventor of the present disclosure found through research that when the metal ions are selected from at least two of the above, the composite material can have a higher plugging rate when plugging the formation well wall fracture.

In the present disclosure, a source of the metal ions is not specifically limited, for example, it may be at least one of ferrous chloride, ferrous sulfate, ferric chloride, ferric sulfate, ferric oxide, ferroferric oxide, ferric bromide, ferrous bromide, ferric nitrate, ferrous nitrate, ferric thiocyanate, ferric iodide, ferrous iodide, ferrous fluoride, ferric fluoride and ferrous sulfocyanate.

According to the present disclosure, based on a total amount of the metal ions, a content of each metal ion independently ranges from 20wt% to 80wt%, preferably from 33wt% to 66wt% respectively.

Preferably, the metal ions are selected from at least one of aluminum ions, iron ions, titanium ions, and zirconium ions.

The composite material of the present disclosure has good cyclic release controllability, which is demonstrated by the following method: the composite material is in a clear and transparent state in an aqueous solution with pH of 9, a 1wt% dilute hydrochloric acid solution is used to adjust the pH of the aqueous solution to 7.5, and the aqueous solution becomes turbid, resulting in a large amount of white precipitates. A 1wt% sodium hydroxide solution is used to adjust the pH of the aqueous solution to 9, and the aqueous solution returns to the clear state. The above steps are repeated for 6 times, and the composite material can still respond quickly. The response of the composite material to pH is shown in Fig. (7), which may prove that the composite material has excellent cyclic release stability.

The above "1wt% dilute hydrochloric acid solution" and "1wt% sodium hydroxide solution" are specific examples in an experiment process, not to limit the concentration.

According to the present disclosure, a method of preparing the composite material may include the following steps:

S1, a polymer is mixed with an organic solvent to obtain a carrier solution;

S2, a metal compound is added to the above carrier solution at -10°C to 120°C for a first reaction to obtain a first reaction solution; and

S3, pH of the above first reaction solution is adjusted to a range from 8 to 12 at 20°C to 40°C, and a second reaction is performed to obtain the composite material.

According to a preferred implementation of the present disclosure, the method is performed under an anaerobic condition.

In the present disclosure, in step S1, the organic solvent is selected from at least one of an alcohol organic solvent, a ketone organic solvent, an ether organic solvent, an ester organic solvent, an aromatic organic solvent, and acetonitrile.

According to some implementations of the present disclosure, the anaerobic condition may be achieved by extracting and exchanging gas from a reaction vessel.

According to some implementations of the present disclosure, the organic solvent is at least one of ethanol, ethylene glycol, furan, tetrahydrofuran, propanol, acetone, butanol, propylene glycol, isopropanol, ethyl acetate, dioxane, acetonitrile, toluene, and xylene.

In the present disclosure, there is no specific limit on the using amount of the organic solvent, as long as it can dissolve or swell the polymer matrix.

According to some implementations of the present disclosure, in step S2, a condition of the first reaction includes:

reaction at -10°C to 120°C for 1-24 hours, preferably reaction at 30°C-100°C for 8-12 hours.

According to some implementations of the present disclosure, in step S3, it is preferable to adjust the pH of the first reaction solution to be in a range from 9 to 10.

According to some implementations of the invention, the pH of the first reaction solution may be adjusted by small-molecular organic acid, and the small-molecular organic acid is selected from at least one of citric acid, oxalic acid, benzoic acid, oleic acid, salicylic acid, acetic acid, formic acid, tartaric acid or malic acid, preferably at least one of citric acid, benzoic acid and acetic acid.

According to some implementations of the present disclosure, in step S3, a condition of the second reaction includes: reaction at 20°C to 40°C for 1-5 hours, preferably reaction at 25°C-30°C for 2-4 hours.

According to some implementations of the present disclosure, the method further includes step S4, that is, a product obtained from the second reaction in step S3, i.e., the second reaction solution, is subjected to solvent removal and drying to obtain the composite material.

In the present disclosure, a condition for solvent removal and drying may be a conventional solvent removal and drying condition in the field.

A second aspect of the present disclosure provides a composition including the composite material described in the first aspect and oil-soluble resin.

According to a preferable implementation of the present disclosure, in the composition, relative to 100 parts by weight of polymer matrix, 3 to 20 parts by weight of oil-soluble resin are provided. The composition contains the oil-soluble resin with the above content, which can improve formation plugging efficiency by combining its hydrophobic characteristic with a reaction effect between the metal ions and a formation.

Preferably, in the composition, relative to 100 parts by weight of polymer matrix, 8 to 15 parts by weight of oil-soluble resin are provided.

According to the preferable implementation of the present disclosure, the oil-soluble resin is selected from at least one of petroleum resin, phenolic resin, coumarone resin, terpene resin, polycarbonate, polyethylene terephthalate, polypropylene, and polystyrene.

Preferably, the oil-soluble resin is selected from at least one of C5 petroleum resin, C9 petroleum resin, coumarone resin, and polypropylene resin.

According to a preferred implementation of the present disclosure, a preparation method of the composition includes: the composite material of the first aspect is mixed with the oil-soluble resin to obtain the composition.

In the present disclosure, in order to obtain the better effect, it is preferable to crush the composite material in the first aspect and then mix it with the oil-soluble resin, preferably, a particle size of the composite material and the oil-soluble resin is controlled to be 200 meshes or above.

In the present disclosure, mixing is selected from a conventional mixing mode in the field.

A third aspect of the present disclosure provides a drilling fluid including the composite material described in the first aspect or the composition described in the second aspect of the present disclosure.

In the present disclosure, the composite material or the composition serves as a well wall stabilizing material.

According to the present disclosure, based on a total mass of the drilling fluid, a content of the well wall stabilizing material ranges from 0.1wt% to 5wt%. The inventor of the present disclosure found through research that the using amount of the well wall stabilizing material only needs to meet the small range above to achieve rapid and efficient plugging of well wall fractures while saving cost.

According to some implementations of the present disclosure, the oil-soluble resin may be mixed with the composite material in advance to be prepared into the composition and added to the drilling fluid, or the oil-soluble resin may be added to the drilling fluid simultaneously with the composite material, as long as the total using amount of the oil-soluble resin and the composite material meets the above range.

Preferably, based on the total mass of the drilling fluid, the content of the well wall stabilizing material ranges from 0.5wt% to 2wt%.

According to some implementations of the present disclosure, the drilling fluid is selected from at least one of a water-based drilling fluid, an oil-based drilling fluid and a foam drilling fluid.

The types and contents of other components in the drilling fluid may be selected with reference to the prior art.

A fourth aspect of the present disclosure provides a method of plugging formation well wall fracture including: feeding the drilling fluid described in the third aspect of the present disclosure into a formation in a drilling process, so that the drilling fluid penetrates into the formation well wall fracture and plugs the formation well wall fracture.

In the present disclosure, as the drilling fluid contains the composite material described in the first aspect of the present disclosure, when the drilling fluid makes contact with the formation well wall fracture, the polymer matrix in the composite material can quickly sense a pH difference between the formation well wall fracture and the drilling fluid, thereby making a response, morphology of the polymer matrix changes, the metal ions embedded in the polymer matrix are released, thereby achieving the precise response and precise matching with the formation well wall fracture environment, and effectively increasing the plugging rate of the formation well wall fracture.

According to some implementations of the present disclosure, a width of the formation well wall fracture is not greater than 100 $\mu$m, preferably not greater than 60 $\mu$m.

The present disclosure will be described in detail below through Examples. In the following Examples, unless otherwise specified, reagents used are all commercially available industrial products. Types of groups in the polymer matrix were measured by a Nicolet 5DX Fourier transform infrared spectrometer.

For the purpose of unified expression, compositions prepared in Examples 1-7, Examples 9-10, and Comparative Examples 1-4, as well as a composite material prepared in Example 8, are collectively referred to as the well wall stabilizing material.

A content of the metal ions in the well wall stabilizing material is determined by the following method: it is measured by ICP that a weight of the metal ions in the well wall stabilizing material is m, it is measured by electronic balance that the total weight of the well wall stabilizing material is M, and the content of the metal ions is calculated by a formula: the content of the metal ions=(m/M)$\times$100%.

Example 1

S1, after extracting and exchanging gas into a three-necked bottle of 500 mL for three times, 25 g of dibenzo-14-crown-4 crown ether (14-crown-4), 25 g of dibenzo-18-crown-6, 5 g of polyethylene glycol (with a number average molecular weight 200), 2.5 g of carboxymethyl starch and 2.5 g of carboxypropyl starch were added, 50 mL of ethanol and 50 mL of isopropanol were added, and stirring was performed until all components were fully dispersed to obtain a carrier solution;

S2, a temperature of the carrier solution was controlled to be -10°C, and 25 g of triethylaluminium and 25 g of ferric chloride were added, and reacted at -10°C for 24 h to obtain a first reaction solution;

S3, a temperature of the first reaction solution was raised to 25°C, citric acid was added, pH of the first reaction solution was adjusted to be 9, and reaction was performed at 25°C for 3 h to obtain a second reaction solution;

S4, the second reaction solution was distilled under reduced pressure to recover an organic solvent, and a residue was dried to obtain a composite material; and

S5, 92 g of the above composite material was taken and crushed, and 5 g of C9 petroleum resin (300 meshes) was added, and stirred evenly to obtain a composition, named a well wall stabilizing material A1.

The embedding rate of the metal ions is obtained by first using an XPS method to measure a weight M1 of the metal ions at 0-3 nm on a surface of the polymer matrix, then measuring a total weight $M_0$ of the metal ions in the well wall stabilizing material by an ICP method, and then performing calculation of a formula: embedding rate=$(M_0-M_1)/M_0 \times 100\%$.

In the present disclosure, a testing method of the XPS is as follows: testing was performed on an ESCALab250 type X-ray photoelectron spectrometer equipped with Thermo Avantage V5.926 software, an excitation source was a monochromatic Al K$\alpha$X-ray, energy was 1486.6 eV, power was 150 W, transmittance energy used by narrow scanning was 30 eV, basic vacuum during analysis and testing was $6.53 \times 10^{-9}$ mbar, electron binding energy was corrected with a C1s peak (284.6 eV) of simple substance carbon, data processing was performed on Thermo Avantage software, and quantitative analysis was performed in an analysis module by using a sensitivity factor method to obtain a metal ion weight at 0-3 nm on the surface.

A testing method of the ICP is as follows: 10 g of well wall stabilizing material sample was taken, 100 mL of concentrated hydrochloric acid was added to dissolve the sample completely, the same was made to be at a constant volume of 500 mL solution, and an ICP-OES 5100 type spectrum emission instrument was used for detection.

It is measured by ICP that a weight of the metal ions is m, it is weighed by electronic balance that the total weight of the well wall stabilizing material is M, and the content of the metal ions in the well wall stabilizing material A1 is calculated by a formula: (m/M)*100%.

In the well wall stabilizing material A1, the content of the metal ions, the embedding rate of the metal ions, and the solubility of the well wall stabilizing material A1 in water are shown in Table 1.

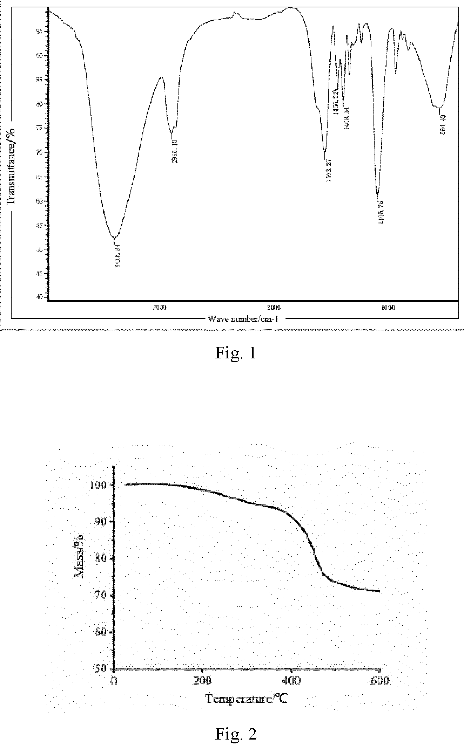

Fig. 1 is an infrared spectrogram of the well wall stabilizing material A1. Since after the metal ions are embedded, there is an obvious carbonyl migration phenomenon, reducing from about 1700 cm$^{-1}$ to below 1568 cm$^{-1}$, which proves that the metal ions are connected with the polymer matrix through a coordination bond, and meanwhile, cryptand (dibenzo14-crown-4-crown ether (14-crown-4) and 25 g of dibenzo-18-crown-6) contained in the polymer matrix are connected with the metal ions through molecular recognition.

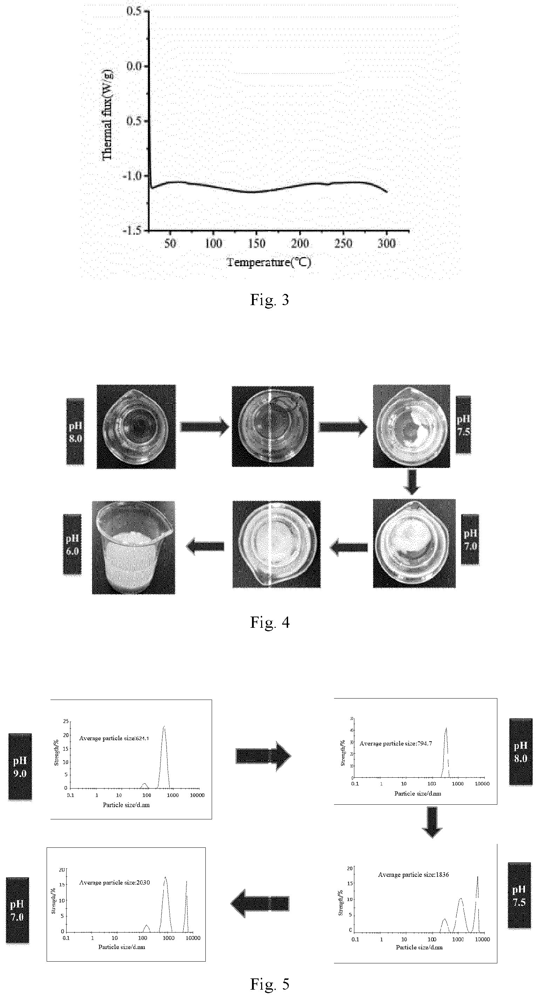

The thermal stability of the well wall stabilizing material A1 is tested by using a TGA/DSC1 thermogravimetric and synchronous thermal analyzer. The TG diagram (Fig. 2) shows that an initial thermal decomposition temperature of the product reaches 165°C, and there is no obvious endothermic or exothermic peak (Fig. 3) in the DSC, nor any significant phase change. The result shows that the well wall stabilizing material A1 has good thermal stability, and the thermal decomposition temperature is shown in Table 1.

A pH meter is used to monitor a change of a pH value of the solution in real time, a Malvern highly-sensitive nanoparticle size analyzer is used to monitor a particle size change of the well wall stabilizing material A1 in a process of pH response (Fig. 5), and the turbidity is measured by a high-range turbidity meter SH50/HZX4000. A 1wt% dilute hydrochloric acid solution is dropwise dropped into an aqueous solution containing the well wall stabilizing material A1. A state of the solution (4) is observed, and when the solution begins to become turbid, it is regarded that the well wall stabilizing material A1 begins to respond.

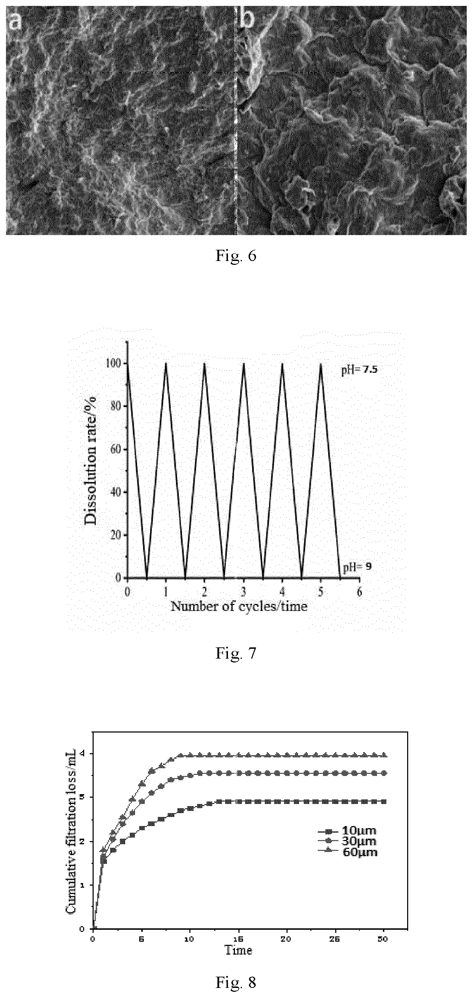

It can be seen from monitoring that when pH=9, the turbidity of the aqueous solution is 3 NTU, and the average particle size of the solid particles is 624.1 nm; when pH=8, the aqueous solution is turbid, the turbidity is 1080 NTU, and the average particle size of the solid particles is 794.7 nm; when pH=7.5, the turbidity of the aqueous solution is 2100 NTU, and the average particle size of the solid particles is 1836 nm; and when pH=7, the turbidity of the aqueous solution is 3790 NTU, and the average particle size of the solid particles is 2030 nm. It can be seen that the particle size of the well wall stabilizing material A1 increases with the decrease of pH. Under a condition that the pH of the aqueous solution is adjusted from 9 to 8, the average particle size of the solid particles increases by 27%. Under a condition that the pH of the aqueous solution is adjusted from 8 to 6, the average particle size of the solid particles increases by 230%. Combined with an electron microscopy change (Fig. 6), it can be seen that the metal ions in the well wall stabilizing material A1 undergo rapid ion aggregation, resulting in an increase in particle size.

In order to test its controllable release performance and cyclic release stability, the well wall stabilizing material of the present disclosure has the turbidity of 3 NTU in an aqueous solution with the pH of 9, and is in a clear and transparent state. When a 1wt% dilute hydrochloric acid solution is used to adjust the pH of the aqueous solution to 7.5, the aqueous solution becomes turbid and a large amount of white precipitates appear, with the turbidity of 2100 NTU. A 1wt% sodium hydroxide solution is used to adjust the pH of the aqueous solution to 9, the aqueous solution returns to the clear state, and the turbidity is 3 NTU. The above steps are repeated for 6 times, and the well wall stabilizing material can still respond quickly (Fig. 7). This can prove that the well wall stabilizing material has excellent cyclic release stability. Through calculation, after 6 responses, the precipitation amount of the precipitate of the well wall stabilizing material is still as high as 99.55wt%, indicating good pH responsive cyclic stability.

The precipitate precipitation amount is measured through the following method: a product of a first pH response of the well wall stabilizing material A1 was centrifuged to obtain a first precipitate, a weight of the first precipitate was weighed to be $G_0$, a product of a sixth pH response of the well wall stabilizing material A1 was centrifuged to obtain a second precipitate, and a weight of the precipitate was weighed to be $G_1$. The precipitate precipitation rate was obtained by calculating through a formula: precipitate precipitation rate=$G_1/G_0 \times 100\%$.

Example 2

S1, after extracting and exchanging gas into a three-necked bottle of 2000 mL for three times, 50 g of 18-crown-6, 50 g of β-cyclodextrin, 50 g of polyethylene glycol (with a number average molecular weight 1000), 50 g of polyethylene glycol (with a number average molecular weight 2000), and 20 g of oxidized starch were added, 300 mL of ethylene glycol and 300 mL of tetrahydrofuran were added, and stirring was performed until all components were fully dispersed to obtain a carrier solution;
S2, a temperature of the carrier solution was controlled to be 120°C, and 100 g of aluminum acetylacetonate, 100 g of aluminum isopropoxide, 150 g of ferrous sulfate, and 50 g of ferriferrous oxide were added, and reacted at 120°C for 1 h to obtain a first reaction solution;
S3, a temperature of the first reaction solution was reduced to 25°C, oxalic acid and benzoic acid were added to adjust pH of the first reaction solution to 10, and reaction was continued at 25°C for 5 h to obtain a second reaction solution;
S4, the second reaction solution was distilled under reduced pressure to recover an organic solvent, and a residue was dried to obtain a composite material; and
S5, 813g of the above composite material was taken and crushed, and 50 g of coumarone resin (300 meshes) and 50 g of polycarbonate (300 meshes) were added, and stirred evenly to obtain a composition, named a well wall stabilizing material A2.

In the well wall stabilizing material A2, the content of the metal ions, the embedding rate of the metal ions, and the solubility of the well wall stabilizing material A2 in water are shown in Table 1.

The thermal stability of the well wall stabilizing material A2 is tested by using a TGA/DSC1 thermogravimetric and synchronous thermal analyzer, and a thermal decomposition temperature is shown in Table 1.

The well wall stabilizing material A2 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material A2 in a pH response process. Under a condition that pH of the aqueous solution is adjusted from 9 to 8, the aqueous solution is turbid, the turbidity is 1130 NTU, and an average particle size of solid particles increases by 31%. Under a condition that the pH of the aqueous solution is adjusted from 8 to 6, the turbidity is 3780 NTU, and the average particle size of the solid particles increases by 260%.

Example 3

S1, after extracting and exchanging gas into a three-necked bottle of 2000 mL for three times, 10 g of calix[4]arene, 90 g of α-cyclodextrin, 20 g of polyethylene glycol (with a number average molecular weight 20000), 10 g of dextrin and 10 g of hydroxypropyl methyl cellulose were added, 500 mL of xylene and 500 mL of toluene were added, and stirring was performed until all components were fully dispersed to obtain a carrier solution;

S2, a temperature of the carrier solution was controlled to be 30°C, and 100 g of methylaluminoxane and 100 g of ferrous chloride were added, and reacted at 30°C for 12 h to obtain a first reaction solution;

S3, a temperature of the first reaction solution was reduced to 25°C, acetic acid was added to adjust pH of the first reaction solution to 9.6, and reaction was continued at 25°C for 4 h to obtain a second reaction solution;

S4, the second reaction solution was distilled under reduced pressure to recover an organic solvent, and a residue was dried to obtain a composite material; and

S5, 382 g of the above composite material was taken and crushed, and 20 g of C5 petroleum resin (300 meshes) and 5 g of polypropylene resin (300 meshes) were added, and stirred evenly to obtain a composition, named a well wall stabilizing material A3.

In the well wall stabilizing material A3, the content of the metal ions, the embedding rate of the metal ions, and the solubility of the well wall stabilizing material A3 in water are shown in Table 1.

The thermal stability of the well wall stabilizing material A3 is tested by using a TGA/DSC1 thermogravimetric and synchronous thermal analyzer, and a thermal decomposition temperature is shown in Table 1.

The well wall stabilizing material A3 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material A3 in a pH response process. Under a condition that pH of the aqueous solution is adjusted from 9 to 8, the aqueous solution is turbid, the turbidity is 1010 NTU, and an average particle size of solid particles increases by 21%. Under a condition that the pH of the aqueous solution is adjusted from 8 to 6, the turbidity is 3800 NTU, and the average particle size of the solid particles increases by 240%.

Example 4

S1, after extracting and exchanging gas into a three-necked bottle of 5000 mL for three times, 200 g of β-cyclodextrin, 100 g of 30-crown-10, 100 g of calix[8]arene, 320 g of polyethylene glycol (with a number average molecular weight 100000), 200 g of polyanionic cellulose, and 120 g of pregelatinized starch were added, 1500 mL of acetone was added, and stirring was performed until all components were fully dispersed to obtain a carrier solution;

S2, a temperature of the carrier solution was controlled to be 100°C, and 600 g of diethylaluminium chloride, 100 g of ferrous sulfate, and 100 g of ferric iodide were added, and reacted at 100°C for 8 h to obtain a first reaction solution;

S3, a temperature of the first reaction solution was reduced to 25°C, salicylic acid and citric acid were added to adjust pH of the first reaction solution to 9.8, and reaction was continued at 25°C for 4 h to obtain a second reaction solution;

S4, the second reaction solution was distilled under reduced pressure to recover an organic solvent, and a residue was dried to obtain a composite material; and

S5, 2283 g of the above composite material was taken and crushed, and 20 g of C5 petroleum resin (300 meshes) and 5 g of polypropylene resin (300 meshes) were added, and stirred evenly to obtain a composition, named a well wall stabilizing material A4.

In the well wall stabilizing material A4, the content of the metal ions, the embedding rate of the metal ions, and the solubility of the well wall stabilizing material A4 in water are shown in Table 1.

The thermal stability of the well wall stabilizing material A4 is tested by using a TGA/DSC1 thermogravimetric and synchronous thermal analyzer, and a thermal decomposition temperature is shown in Table 1.

The well wall stabilizing material A4 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material A4 in a pH response process. Under a condition that pH of the aqueous solution is adjusted from 9 to 8, the turbidity is 1350 NTU, and an average particle size of solid particles increases by 52%. Under a condition that the pH of the aqueous solution is adjusted from 8 to 6, the turbidity is 3980 NTU, and the average particle size of the solid particles increases by 275%.

Example 5

S1, after extracting and exchanging gas into a three-necked bottle of 500 mL for three times, 27 g of 14-crown-4, 25 g of dibenzo-18-crown-6, 5.5 g of carboxymethyl starch and 2.5 g of carboxypropyl starch were added, 50 mL of ethanol and 50 mL of isopropanol were added, and stirring was performed until all components were fully dispersed to obtain a carrier solution;

S2, a temperature of the carrier solution was controlled to be -10°C, and 25 g of triethylaluminium and 25 g of ferric chloride were added, and reacted at -10°C for 24 h to obtain a first reaction solution;

S3, a temperature of the first reaction solution was raised to 25°C, citric acid was added, pH of the first reaction solution was adjusted to be 9, and reaction was continued at 25°C for 3 h to obtain a second reaction solution;

S4, the second reaction solution was distilled under reduced pressure to recover an organic solvent, and a residue was dried to obtain a composite material; and

S5, 91.3 g of the above composite material was taken and crushed, and 5 g of C9 petroleum resin (300 meshes) was added, and stirred evenly to obtain a composition, named a well wall stabilizing material A5.

In the well wall stabilizing material A5, the content of the metal ions, the embedding rate of the metal ions, and the solubility of the well wall stabilizing material A5 in water are shown in Table 1.

The thermal stability of the well wall stabilizing material A5 is tested by using a TGA/DSC1 thermogravimetric and synchronous thermal analyzer, and a thermal decomposition temperature is shown in Table 1.

The well wall stabilizing material A5 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material A5 in a pH response process. Under a condition that pH of the aqueous solution is adjusted from 9 to 8, the turbidity is 1290 NTU, and an average particle size of solid particles increases by 27%. Under a condition that the pH of the aqueous solution is adjusted from 8 to 6, the turbidity is 3780 NTU, and the average particle size of the solid particles increases by 220%.

Example 6

S1, after extracting and exchanging gas into a three-necked bottle of 500 mL for three times, 25 g of 14-crown-4, 27 g of dibenzo-18-crown-6, and 8 g of polyethylene glycol (with a number average molecular weight 200) were added, 50 mL of ethanol and 50 mL of isopropanol were added, and stirring was performed until all components were fully dispersed to obtain a carrier solution;

S2, a temperature of the carrier solution was controlled to be -10°C, and 25 g of triethylaluminium and 25 g of ferric chloride were added, and reacted at -10°C for 24 h to obtain a first reaction solution;

S3, a temperature of the first reaction solution was raised to 25°C, citric acid was added, pH of the reaction solution was adjusted to be 9, and reaction was continued at 25°C for 3 h to obtain a second reaction solution;

S4, the second reaction solution was distilled under reduced pressure to recover an organic solvent, and a residue was dried to obtain a composite material; and

S5, 92.5 g of the above composite material was taken and crushed, and 5 g of C9 petroleum resin (300 meshes) was added, and stirred evenly to obtain a composition, named a well wall stabilizing material A6.

In the well wall stabilizing material A6, the content of the metal ions, the embedding rate of the metal ions, and the solubility of the well wall stabilizing material A6 in water are shown in Table 1.

The thermal stability of the well wall stabilizing material A6 is tested by using a TGA/DSC1 thermogravimetric and synchronous thermal analyzer, and a thermal decomposition temperature is shown in Table 1.

The well wall stabilizing material A6 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material A6 in a pH response process. Under a condition that pH of the aqueous solution is adjusted from 9 to 8, the turbidity is 1019 NTU, and an average particle size of solid particles increases by 22%. Under a condition that the pH of the aqueous solution is adjusted from 8 to 6, the turbidity is 3720 NTU, and the average particle size of the solid particles increases by 231%.

Example 7

S1, after extracting and exchanging gas into a three-necked bottle of 500 mL for three times, 30 g of polyethylene glycol (with a number average molecular weight 200), 12.5 g of carboxymethyl starch and 17.5 g of carboxypropyl starch were added, 50 mL of ethanol and 50 mL of isopropanol were added, and stirring was performed until all components were fully dispersed to obtain a carrier solution;

S2, a temperature of the carrier solution was controlled to be -10°C, and 25 g of triethylaluminium and 25 g of ferric chloride were added, and reacted at -10°C for 24 h to obtain a first reaction solution;

S3, a temperature of the first reaction solution was raised to 25°C, citric acid was added, pH of the reaction solution was adjusted to be 9, and reaction was continued at 25°C for 3 h to obtain a second reaction solution;

S4, the second reaction solution was distilled under reduced pressure to recover an organic solvent, and a residue was dried to obtain a composite material; and

S5, 91.7 g of the above composite material was taken and crushed, and 5 g of C9 petroleum resin (300 meshes) was added, and stirred evenly to obtain a composition, named a well wall stabilizing material A7.

In the well wall stabilizing material A7, the content of the metal ions, the embedding rate of the metal ions, and the solubility of the well wall stabilizing material A7 in water are shown in Table 1.

The thermal stability of the well wall stabilizing material A7 is tested by using a TGA/DSC1 thermogravimetric and synchronous thermal analyzer, and a thermal decomposition temperature is shown in Table 1.

The well wall stabilizing material A7 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material A7 in a pH response process. Under a condition that pH of the aqueous solution is adjusted from 9 to 8, the turbidity is 1129 NTU, and an average particle size of solid particles increases by 30%. Under a condition that the pH of the aqueous solution is adjusted from 8 to 6, the turbidity is 3670 NTU, and the average particle size of the solid particles increases by 223%.

Example 8

S1, after extracting and exchanging gas into a three-necked bottle of 500 mL for three times, 25 g of 14-crown-4, 25 g of dibenzo-18-crown-6, 5 g of polyethylene glycol (with a number average molecular weight 200), 2.5 g of carboxymethyl starch and 2.5 g of carboxypropyl starch were added, 50 mL of ethanol and 50 mL of isopropanol were added, and stirring was performed until all components were fully dispersed to obtain a carrier solution;

S2, a temperature of the carrier solution was controlled to be -10°C, and 25 g of triethylaluminium and 25 g of ferric chloride were added, and reacted at -10°C for 24 h to obtain a first reaction solution;

S3, a temperature of the first reaction solution was raised to 25°C, citric acid was added, pH of the reaction solution was adjusted to be 9, and reaction was continued at 25°C for 3 h to obtain a second reaction solution;

S4, the second reaction solution was distilled under reduced pressure to recover an organic solvent, and a residue was dried to obtain a composite material; and

S5, 91.8 g of the above composite material was taken and crushed to obtain a well wall stabilizing material A8.

In the well wall stabilizing material A8, the content of the metal ions, the embedding rate of the metal ions, and the solubility of the well wall stabilizing material A8 in water are shown in Table 1.

The thermal stability of the well wall stabilizing material A8 is tested by using a TGA/DSC1 thermogravimetric and synchronous thermal analyzer, and a thermal decomposition temperature is shown in Table 1.

The well wall stabilizing material A8 is tested by a Nicolet 5DX Fourier transform infrared spectrometer, which can prove that the metal ions are connected with the polymer matrix through a coordination bond.

A Malvern highly-sensitive nanoparticle size analyzer is used to monitor a particle size change of the well wall stabilizing material A8 in a pH response process. Under a condition that pH of the aqueous solution is adjusted from 9 to 8, the turbidity is 1039 NTU, and an average particle size of solid particles increases by 23%. Under a condition that the pH of the aqueous solution is adjusted from 8 to 6, the turbidity is 3700 NTU, and the average particle size of the solid particles increases by 225%.

Example 9

A well wall stabilizing material is prepared according to the method of Example 1. The difference lies in that the adding amount of 14-crown-4 is 20 g, and the well wall stabilizing material A9 is finally prepared.

In the well wall stabilizing material A9, the content of the metal ions, the embedding rate of the metal ions, and the solubility of the well wall stabilizing material A9 in water are shown in Table 1.

The thermal stability of the well wall stabilizing material A9 is tested by using a TGA/DSC1 thermogravimetric and synchronous thermal analyzer, and a thermal decomposition temperature is shown in Table 1.

The well wall stabilizing material A9 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material A9 in a pH response process. Under a condition that pH of the aqueous solution is adjusted from 9 to 8, the turbidity is 1239 NTU, and an average particle size of solid particles increases by 35%. Under a condition that the pH of the aqueous solution is adjusted from 8 to 6, the turbidity is 3560 NTU, and the average particle size of the solid particles increases by 210%.

Example 10

A well wall stabilizing material is prepared according to the method of Example 3. The difference lies in that the number average molecular weight of polyethylene glycol is 500, and the well wall stabilizing material A10 is finally prepared.

In the well wall stabilizing material A10, the content of the metal ions, the embedding rate of the metal ions, and the solubility of the well wall stabilizing material A10 in water are shown in Table 1.

The thermal stability of the well wall stabilizing material A10 is tested by using a TGA/DSC1 thermogravimetric and synchronous thermal analyzer, and a thermal decomposition temperature is shown in Table 1.

The well wall stabilizing material A10 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material A10 in a pH response process. Under a condition that pH of the aqueous solution is adjusted from 9 to 8, the turbidity is 1235 NTU, and an average particle size of solid particles increases by 34%. Under a condition that the pH of the aqueous solution is adjusted from 8 to 6, the turbidity is 3320 NTU, and the average particle size of the solid particles increases by 203%.

Comparative Example 1

A well wall stabilizing material is prepared according to the method of Example 1. The difference lies in that in step S2, a temperature of the carrier solution was controlled to be -10°C, and 25 g of triethylaluminium and 25 g of ferric chloride were added, and reacted at -10°C for 0.5 h to obtain a first reaction solution. The well wall stabilizing material D1 is finally prepared.

In the well wall stabilizing material D1, the content of the metal ions, the embedding rate of the metal ions, and the solubility of the well wall stabilizing material D1 in water are shown in Table 1.

The thermal stability of the well wall stabilizing material D1 is tested by using a TGA/DSC1 thermogravimetric and synchronous thermal analyzer, and a thermal decomposition temperature is shown in Table 1.

The well wall stabilizing material D1 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition. XPS characterizes that there is no metal peak on a surface of the well wall stabilizing material D1.

A Malvern highly-sensitive nanoparticle size analyzer is used to monitor a particle size change of the well wall stabilizing material D1 in a pH response process. Under a condition that pH of the aqueous solution is adjusted from 9 to 8, the turbidity is 570 NTU, and an average particle size of solid particles increases by 11%. Under a condition that the pH of the aqueous solution is adjusted from 8 to 6, the turbidity is 2100 NTU, and the average particle size of the solid particles increases by 112%.

Comparative Example 2

A well wall stabilizing material is prepared according to the method of Example 1. The difference lies in that in step S3, a temperature of the first reaction solution is raised to 25°C, and without adjusting the pH, the reaction is directly performed at 25°C for 3 h to obtain a second reaction solution. The well wall stabilizing material D2 is finally prepared.

In the well wall stabilizing material D2, the content of the metal ions, the embedding rate of the metal ions, and the solubility of the well wall stabilizing material D2 in water are shown in Table 1.

The thermal stability of the well wall stabilizing material D2 is tested by using a TGA/DSC1 thermogravimetric and synchronous thermal analyzer, and a thermal decomposition temperature is shown in Table 1.

The well wall stabilizing material D2 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition. XPS characterizes that there is a metal peak on a surface of the well wall stabilizing material D2.

A Malvern highly-sensitive nanoparticle size analyzer is used to monitor a particle size change of the well wall stabilizing material D2 in a pH response process. Under a condition that pH of the aqueous solution is adjusted from 9 to 8, the turbidity is 310 NTU, and an average particle size of solid particles increases by 7%. Under a condition that the pH of the aqueous solution is adjusted from 8 to 6, the turbidity is 1800 NTU, and the average particle size of the solid particles increases by 130%.

Comparative Example 3

A well wall stabilizing material is prepared according to the method of Example 1. The difference lies in that polyethylene glycol, carboxymethyl starch and carboxypropyl starch are not contained, the using amount of 25g dibenzo-18-crown-6 is 30 g, and the using amount of 14-crown-4 is 30 g, so that the well wall stabilizing material D3 is prepared.

In the well wall stabilizing material D3, the content of the metal ions, the embedding rate of the metal ions, and the solubility of the well wall stabilizing material D3 in water are shown in Table 1.

The thermal stability of the well wall stabilizing material D3 is tested by using a TGA/DSC1 thermogravimetric and synchronous thermal analyzer, and a thermal decomposition temperature is shown in Table 1.

The well wall stabilizing material D3 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material D3 in a pH response process. Under a condition that pH of the aqueous solution is adjusted from 9 to 8, the turbidity is 1030 NTU, and an average particle size of solid particles increases by 24%. Under a condition that the pH of the aqueous solution is adjusted from 8 to 6, the turbidity is 3230 NTU, and the average particle size of the solid particles increases by 210%.

Comparative Example 4

A well wall stabilizing material is prepared according to the method of Example 1. The difference lies in that 25 g of ferric chloride is replaced with 25 g of triethylaluminium, and the well wall stabilizing material D4 is finally prepared.

In the well wall stabilizing material D4, the content of the metal ions, the embedding rate of the metal ions, and the solubility of the well wall stabilizing material D4 in water are shown in Table 1.

The thermal stability of the well wall stabilizing material D4 is tested by using a TGA/DSC1 thermogravimetric and synchronous thermal analyzer, and a thermal decomposition temperature is shown in Table 1.

The well wall stabilizing material D4 is tested by a Nicolet 5DX Fourier transform infrared spectrometer, which can prove that the metal ions are connected with the polymer matrix through a coordination bond, and meanwhile, cryptand contained in the polymer matrix is connected with the metal ions through molecular recognition.

A Malvern highly-sensitive nanoparticle size analyzer is used to monitor a particle size change of the well wall stabilizing material D4 in a pH response process. Under a condition that pH of the aqueous solution is adjusted from 9 to 8, the turbidity is 1120 NTU, and an average particle size of solid particles increases by 26%. Under a condition that the pH of the aqueous solution is adjusted from 8 to 6, the turbidity is 3200 NTU, and the average particle size of the solid particles increases by 200%.

Table 1

| Well wall stabilizing material | Content of metal ions (wt%) | Embedding rate of metal ions (wt%) | Solubility (g/100g) | Thermal decomposition temperature (°C) |
|---|---|---|---|---|
| A1 | 45.3 | 96.3 | 9.2 | 165 |
| A2 | 57.1 | 96.7 | 9.6 | 154 |
| A3 | 58.8 | 98.5 | 9.8 | 185 |
| A4 | 53.5 | 99.4 | 10 | 190 |
| A5 | 45.3 | 95.1 | 8.9 | 205 |
| A6 | 45.3 | 95.3 | 9.4 | 185 |
| A7 | 45.3 | 95.8 | 8.2 | 175 |
| A8 | 45.3 | 97.5 | 9 | 160 |
| A9 | 47.6 | 95.4 | 8.7 | 150 |
| A10 | 45.3 | 96.1 | 9 | 163 |
| D1 | 45.3 | 11.5 | 2.1 | 165 |
| D2 | 45.3 | 24.6 | 3.6 | 165 |
| D3 | 45.3 | 79 | 8.2 | 151 |
| D4 | 45.3 | 89.2 | 8.6 | 150 |

The following Application Examples and Comparative Application Examples are used to illustrate an application method of the well wall stabilizing material prepared in Examples and Comparative Examples in plugging of a formation well wall fracture.

Application Example 1

A plugging rate is measured by the following method: through a Darcy-Weisbach formula, a permeability of a simulated nano-micron-level formation before and after plugging by using a drilling fluid containing the well wall stabilizing material A1 was calculated, thereby obtaining the plugging rate.

(1) Simulation of the formation well wall fractures: bentonite and baryte are used as raw materials, a GG42-2 high-temperature and high-pressure filter tester is used to prepare a cylindrical mud cake with a thickness of 2 cm and a diameter of 3.5 cm to simulate the nano-micron-level formation (with the permeability of $930.13 \times 10^{-2}$ mD, wherein 1 mD is equivalent to $9.869233 \times 10^{-16}$ m$^2$), wherein, the micro-nano-level formation has a fracture with a width of 10 $\mu$m;
(2) configuration of a water-based drilling fluid: 4wt% bentonite+0.1wt% NaOH+0.1wt% Na$_2$CO$_3$, 0.2wt% HV-CMC+0.5wt% LV-CMC+0.5wt% KPAM+1.5wt% modified ammonium salt+1.5wt% ultrafine calcium carbonate+1.5wt% potassium humate (density 1.3 g/cm$^3$) are taken, and then 2wt% well wall stabilizing material A1 is added to obtain a drilling fluid L1; and
(3) simulation of a plugging process: the configured drilling fluid L1 is fed into the nano-micron-level formation above. The drilling fluid encounters the fracture, penetrates into the formation well wall fracture, and plugs the formation well wall fracture.

A plugging rate of L1 for a rock sample with a fracture width of 10 $\mu$m and the permeability of the formation are shown in Table 2.

Application Examples 2-10

According to the method of Application Example 1, the difference lies in that in step (2), when the water-based drilling fluid is configured, the well wall stabilizing material A1 is replaced with the well wall stabilizing materials A2-A10 respectively, to obtain the drilling fluids L2-L10.

Plugging rates of L2-L10 for the rock sample with the fracture width of 10 $\mu$m and the permeability of the formation are shown in Table 2.

Comparative Application Examples 1-5

According to the method of Application Example 1, the difference lies in that in step (2), when the water-based drilling fluid is configured, the well wall stabilizing material A1 is replaced with the well wall stabilizing materials D1-D4 and a commercially available aluminum-based treatment agent Max-PLEX (a product of Baker Hughes) respectively, to obtain the drilling fluids DL1-DL5.

Plugging rates of DL1-DL5 for the rock sample with the fracture width of 10 $\mu$m and the permeability of the formation are shown in Table 2.

Control Example

According to the method of Application Example 1, the difference lies in that in step (2), when the water-based drilling fluid is configured, no well wall stabilizing material is added.

A plugging rate of the water-based drilling fluid for the rock sample with the fracture width of 10 $\mu$m and the permeability of the formation are shown in Table 2.

Table 2

| Drilling fluid | Temperature (°C) | Permeability ($10^{-2}$ mD)* | Plugging rate (%) |
|---|---|---|---|
| L1 | 100 | 15.12 | 98.37 |
| L2 | 100 | 13.4 | 98.54 |
| L3 | 100 | 13.56 | 98.56 |
| L4 | 100 | 12.37 | 98.67 |
| L5 | 100 | 15.17 | 98.37 |
| L6 | 100 | 16.03 | 98.28 |
| L7 | 100 | 14.98 | 98.39 |
| L8 | 100 | 17.18 | 98.15 |
| L9 | 100 | 28.7 | 96.91 |
| L10 | 100 | 14.98 | 98.39 |
| D1 | 100 | 137.6 | 85.21 |
| D2 | 100 | 257.9 | 72.27 |
| DL3 | 100 | 30.9 | 96.68 |
| DL4 | 100 | 37.6 | 95.96 |
| DL5 | 100 | 47.9 | 94.85 |
| Water-based drilling fluid | 100 | 738.42 | 20.6 |
| * 1 mD is equivalent to 9.869233 x $10^{-16}$ m$^2$ | | | |

In order to further illustrate that the prepared well wall stabilizing material has a high plugging rate and short plugging time for fractures of different sizes, rock samples with simulated fracture widths of 10$\mu$m, 30$\mu$m, and 60 $\mu$m are made respectively, and the drilling fluid L1 configured in Example 1 is fed into the formation, so that the drilling fluid penetrates into the formation well wall fractures and plugs the formation well wall fractures. A cumulative liquid output at different time points is recorded, and a curve is as shown in Fig. 8.

It can be seen from Fig. 8 that after adding the well wall stabilizing material A1, the drilling fluid exhibits good capability of self-adaptive deformation to plug the micro fractures. The fractures of different sizes can be quickly plugged by releasing metal ions quickly, and can be plugged in about 10 minutes.

In addition, through scanning electron microscopy, it is found that a filter cake (a in Fig. 6) formed after the formation well wall fractures are plugged through the drilling fluid without the well wall stabilizing material provided by the present disclosure has a rough surface and large clumps of clay particles aggregating, the clay particles show irregular concave and convex shapes, there are some small pores on the surface of a mud cake, and clay cannot be fully hydrated to form a hydration film, making it easy for water to filter through the mud cake, and causing excessive filtration loss.

A filter cake (b in Fig. 6) formed after the formation well wall fractures are plugged through the drilling fluid with the well wall stabilizing material A1 has a dense and smooth surface, and actively repairs micro-fractures of different scales, thereby improving the morphology of the filter cake and improving plugging performance.

It can be seen from the above content and content in Table 2 that the plugging rate of the drilling fluid containing the well wall stabilizing material provided by the present disclosure is higher than 95% under the corresponding test temperature conditions, indicating that the well wall stabilizing material has good plugging ability for a nano-micron porous formation.

Furthermore, the present disclosure tests influence of different concentrations of well wall stabilizing material A1 on embedding performance after aging at 25°C, 120°C, and 150°C. Wherein, the drilling fluid is 4wt% sodium bentonite slurry, and the concentrations of the well wall stabilizing material A1 are 0.5wt%, 1wt%, 1.5wt%, and 2wt% respectively. Plastic viscosity (PV), yield point (YP), medium-pressure filtration loss ($FL_{API}$), and high-temperature and high-pressure filtration loss ($FL_{HTHP}$) of the drilling fluid are shown in Table 3.

$FL_{API}$, $FL_{HTHP}$, and YP are measured of ISO 10416:2008 "Recommended Practice for Laboratory Testing of Drilling Fluids" method; and PV is measured of the GB/T16783.2-2012 standard.

Table 3

| Condition | Sample | $PV$ (mPa·s) | $YP$(Pa) | $FL_{API}$ (mL) | $FL_{HTHP}$ (mL) |
|---|---|---|---|---|---|
| 25°C | Slurry | 4 | 4 | 17.5 | 52.4 |
| | Slurry+0.5A1 | 7 | 2 | 13.2 | 30.4 |
| | Slurry+1A1 | 9 | 2 | 11.4 | 28 |
| | Slurry+1.5A1 | 10 | 2.5 | 9.8 | 21.2 |
| | Slurry+2A1 | 11.5 | 2.5 | 7.2 | 18.4 |
| | Slurry+2D2 | 45.1 | 8 | 56.3 | 175.8 |
| 120°C 16h aging | Slurry | 5.5 | 3.5 | 24.6 | 66.8 |
| | Slurry+0.5A1 | 4 | 1.5 | 21.4 | 38.2 |
| | Slurry+1A1 | 5.5 | 1 | 19.4 | 34.6 |
| | Slurry+1.5A1 | 5.5 | 1.5 | 14.6 | 29.8 |
| | Slurry+2A1 | 6.5 | 2 | 9.8 | 25.4 |
| 150°C 16h aging | Slurry | 6 | 1.5 | 28 | 84.2 |
| | Slurry+1A1 | 4 | 0.5 | 23.8 | 49.6 |
| | Slurry+1.5A1 | 5 | 1 | 21.2 | 42.8 |
| | Slurry+2A1 | 5 | 1 | 18.6 | 36.4 |
| | Slurry+2A1 | 6 | 1 | 12.8 | 31.2 |

It can be seen from Table 3 that the plastic viscosity PV increases with the increase of the concentration of the well wall stabilizing material A1 in the drilling fluid, indicating that the well wall stabilizing material A1 has a certain viscosity increasing effect, but has little influence on the performance of yield point, medium-pressure filtration loss, and high-temperature and high-pressure filtration loss. It indicates that the well wall stabilizing material A1 has good filtration loss reduction performance and excellent compatibility performance.

Furthermore, the well wall stabilizing material A1 still exhibits good embedding performance and plugging performance after aging at 120°C and 150°C for 16 h.

**Claims**

1. A composite material comprising a polymer matrix and metal ions embedded in the polymer matrix, wherein an embedding rate of the metal ions is not less than 90wt%, and turbidity of an aqueous solution of the composite material with a concentration ranging from 0.1wt% to 10wt% is not less than 1000 NTU under a condition of pH≤8;

   the polymer matrix is selected from at least two of a polysaccharide substance, a cryptand compound and polyether polyol;
   the metal ions are selected from at least two of aluminum ions, iron ions, titanium ions and zirconium ions; and wherein the embedding rate of the metal ions is obtained by using an X-ray photoelectron spectroscopy (XPS) method to measure a weight $M_1$ of the metal ions at 0-3 nm on a surface of the polymer matrix, then measuring a total weight $M_0$ of the metal ions in the composite material by an inductively coupled plasma spectrometer (ICP), and then performing calculation according to a formula: embedding rate = $(M_0-M_1)/M_0 \times 100\%$.

2. The composite material of claim 1, wherein the embedding rate of the metal ions is not less than 95wt%, preferably ranges from 98wt% to 100wt%.

3. The composite material of claim 1 or 2, wherein solubility of the composite material in water is not less than 0.1 g/100g, preferably ranges from 0.1 g/100g to 10 g/100g.

4. The composite material of any one of claims 1 to 3, wherein under a condition that pH of an aqueous solution of a composite material with a concentration ranging from 0.1wt% to 10wt% is adjusted from 9 to 8, the turbidity of the aqueous solution of the composite material is not less than 1000 NTU, and an average particle size of solid particles in the aqueous solution increases by from 20% to 60%; and

   preferably, under a condition that the pH of the aqueous solution of the composite material with the concentration ranging from 0.1wt% to 10wt% is adjusted from 8 to 6, the turbidity of the aqueous solution of the composite material is not less than 2000 NTU, and the average particle size of the solid particles in the aqueous solution increases by from 200% to 300%.

5. The composite material of any one of claims 1 to 4, wherein the metal ions and the polymer matrix are connected by a coordination bond or by coordination bond and molecular recognition.

6. The composite material of any one of claims 1 to 5, wherein a thermal decomposition temperature of the composite material is not less than 150°C, preferably not less than 180°C.

7. The composite material of any one of claims 1 to 6, wherein a content of the metal ions is in a range from 20wt% to 80wt%, preferably from 40wt% to 75wt%, of the composite material.

8. The composite material of any one of claims 1 to 7, wherein the polymer matrix is selected from at least one of the cryptand compound, the polysaccharide substance, and the polyether polyol;
   preferably, in the polymer matrix, a weight ratio of cryptand to polyether polyol to polysaccharide substance is 1:(0.2-1.2):(0.2-1.2).

9. The composite material of claim 8, wherein the polysaccharide substance is selected from modified starch and/or modified cellulose;

   and/or, the cryptand compound is selected from at least one of crown ether, cyclodextrin and calixarene;
   and/or, a number average molecular weight of the polyether polyol ranges from 200 to 100000;
   and/or, the polyether polyol is selected from at least one of polyethylene glycol, polypropylene glycol, tetrahydrofuranoxide propylene copolymer glycol, trimethylolpropane polyether, polypropylene oxide glycol, polyoxypropylene triol, and polytetrahydrofuran glycol.

10. The composite material of any one of claims 1 to 9, wherein based on a total amount of the metal ions, a content of each metal ion independently ranges from 20wt% to 80wt%, preferably from 33wt% to 66wt% respectively.

11. A composition comprising the composite material of any one of claims 1 to 10 and oil-soluble resin.

12. The composition of claim 11, wherein in the composition, relative to 100 parts by weight of polymer matrix, 3 to 20 parts by weight, preferably 8 to 15 parts by weight of oil-soluble resin are provided;

and/or, the oil-soluble resin is selected from at least one of petroleum resin, phenolic resin, coumarone resin, terpene resin, polycarbonate, polyethylene terephthalate, polypropylene, and polystyrene;
preferably, the oil-soluble resin is selected from at least one of C5 petroleum resin, C9 petroleum resin, coumarone resin, and polypropylene resin.

**13.** A drilling fluid comprising the composite material of any one of claims 1 to 10 or the composition of claim 11 or 12; preferably, the composite material or the composition serves as a well wall stabilizing material.

**14.** The drilling fluid of claim 13, wherein based on a total mass of the drilling fluid, a content of the well wall stabilizing material ranges from 0.1wt% to 5wt%, preferably from 0.5wt% to 2wt%.

**15.** A method of plugging formation well wall fracture comprising: feeding the drilling fluid of claim 13 or 14 into a formation in a drilling process, so that the drilling fluid penetrates into the formation well wall fracture and plugs the formation well wall fracture;
preferably, a width of the formation well wall fracture is not greater than 100 $\mu$m, preferably not greater than 60 $\mu$m.

**Patentansprüche**

**1.** Kompositmaterial, umfassend eine Polymermatrix und Metallionen, die in die Polymermatrix eingebettet sind, worin die Einbettungsrate der Metallionen nicht weniger als 90 Gew.-% beträgt und worin die Trübung einer wässrigen Lösung des Kompositmaterials mit einer Konzentration im Bereich von 0,1 Gew.-% bis 10 Gew.-% nicht weniger als 1.000 NTU unter einer Bedingung mit pH≤8 beträgt;

worin die Polymermatrix ausgewählt ist aus zumindest zwei von einer Polysaccharidsubstanz, einer Kryptand-Verbindung und Polyetherpolyol;
worin die Metallionen ausgewählt sind aus zumindest zwei von Aluminiumionen, Eisenionen, Titanionen und Zirkoniumionen; und
worin die Einbettungsrate der Metallionen erhalten wird unter Verwendung von Röntgen-Photoelektronenspektroskopie (XPS), um das Gewicht $M_1$ der Metallionen in 0-3 nm auf einer Oberfläche der Polymermatrix zu messen, dann das Gesamtgewicht $M_0$ der Metallionen in dem Kompositmaterial durch ein induktiv gekoppeltes Plasma-Spektrometer (ICP) gemessen wird, und dann gemäß der Formel berechnet wird:

$$\texttt{Einbettungrate} = (M_0-M_1)/M_0 \times 100 \text{ \%.}$$

**2.** Kompositmaterial gemäß Anspruch 1, worin die Einbettungsrate der Metallionen nicht weniger als 95 Gew.-% beträgt, und bevorzugt im Bereich von 98 Gew.-% bis 100 Gew.-% liegt.

**3.** Kompositmaterial gemäß Anspruch 1 oder 2, worin die Löslichkeit des Kompositmaterials in Wasser nicht weniger als 0,1 g/100 g beträgt und bevorzugt im Bereich von 0,1 g/100 g bis 10 g/100 g liegt.

**4.** Kompositmaterial gemäß irgendeinem der Ansprüche 1 bis 3, worin unter der Bedingung, dass der der pH-Wert einer wässrigen Lösung eines Kompositmaterials mit einer Konzentration im Bereich von 0,1 Gew.-% bis 10 Gew.-%, von 9 auf 8 eingestellt wird, die Trübung der wässrigen Lösung des Kompositmaterials nicht weniger als 1.000 NTU beträgt und die mittlere Partikelgröße von Festpartikeln in der wässrigen Lösung sich um 20 % bis 60 % erhöht; und worin bevorzugt unter der Bedingung, bei der pH-Wert der wässrigen Lösung des Kompositmaterials mit der Konzentration im Bereich von 0,1 Gew.-% bis 10 Gew.-% von 8 auf 6 eingestellt wird, die Trübung der wässrigen Lösung des Kompositmaterials nicht weniger als 2.000 NTU beträgt und die mittlere Partikelgröße der Festpartikel in der wässrigen Lösung sich um 200 % bis 300 % erhöht.

**5.** Kompositmaterial gemäß irgendeinem der Ansprüche 1 bis 4, worin die Metallionen und die Polymermatrix durch eine Koordinationsbindung oder durch eine Koordinationsbindung und molekulare Erkennung verbunden sind.

**6.** Kompositmaterial gemäß irgendeinem der Ansprüche 1 bis 5, worin die thermische Zersetzungstemperatur des Kompositmaterials nicht weniger als 150°C beträgt, und bevorzugt nicht weniger als 180°C beträgt.

7. Kompositmaterial gemäß irgendeinem der Ansprüche 1 bis 6, worin der Gehalt von Metallionen im Bereich von 20 Gew.-% bis 80 Gew.-%, bevorzugt von 40 Gew.-% bis 75 Gew.-%, des Kompositmaterials liegt.

8. Kompositmaterial gemäß irgendeinem der Ansprüche 1 bis 7, worin die Polymatrix ausgewählt ist aus zumindest einem von der Kryptand-Verbindung, der Polysaccharidsubstanz und dem Polyetherpolyol;
worin bevorzugt in der Polymermatrix das Gewichtsverhältnis von Kryptand zu Polyetherpolyol zu Polysaccharidsubstanz 1:(0,2-1,2):(0,2-1,2) beträgt.

9. Kompositmaterial gemäß Anspruch 8, worin die Polysaccharidsubstanz ausgewählt ist aus modifizierter Stärke und/oder modifizierter Cellulose;

und/oder die Kryptand-Verbindung ausgewählt ist aus zumindest einem von Kronenether, Cyclodextrin und Calixaren;
und/oder das zahlengemittelte Molekulargewicht des Polyetherpolyols im Bereich von 200 bis 100.000 liegt;
und/oder das Polyetherpolyol ausgewählt ist aus zumindest einem von Polyethylenglykol, Polypropylenglykol, Tetrahydrofuranoxid-Propylen-Copolymer-Glykol, Trimethylolpropan-Polyether, Polypropylenoxid-Glykol, Polyoxypropylen-Triol und Polytetrahydrofuran-Glykol.

10. Kompositmaterial gemäß irgendeinem der Ansprüche 1 bis 9, worin, bezogen auf die Gesamtmenge der Metallionen, der Gehalt von jedem Metallion unabhängig im Bereich von 20 Gew.-% bis 80 Gew.-% liegt, bevorzugt von 33 Gew.-% bis 66 Gew.-%.

11. Zusammensetzung, umfassend das Kompositmaterial gemäß irgendeinem der Ansprüche 1 bis 10 und ein öllösliches Harz.

12. Zusammensetzung gemäß Anspruch 11, worin in der Zusammensetzung, relativ zu 100 Masseteilen der Polymermatrix, 3 bis 20 Gewichtsteile, bevorzugt 8 bis 15 Gewichtsteile von öllöslichem Harz vorgesehen sind;

und/oder worin das öllösliche Harz ausgewählt ist aus zumindest einem von Petroleumharz, Phenolharz, Cumaronharz, Terpenharz, Polycarbonat, Polyethylenterephthalat, Polypropylen und Polystyrol;
worin bevorzugt das öllösliche Harz ausgewählt ist aus zumindest einem von einem C5-Petroleumharz, C9-Petroleumharz, Cumaronharz und Polypropylenharz.

13. Bohrfluid, umfassend das Kompositmaterial gemäß irgendeinem der Ansprüche 1 bis 10 oder die Zusammensetzung gemäß Anspruch 11 oder 12;
worin bevorzugt das Kompositmaterial oder die Zusammensetzung als Bohrwand-stabilisierendes Material dient.

14. Bohrfluid gemäß Anspruch 13, worin, bezogen auf die Gesamtmasse der Bohrfluids, der Gehalt des Bohrwandstabilisierenden Materials im Bereich von 0,1 Gew.-% bis 5 Gew.-% liegt, bevorzugt von 0,5 Gew.-% bis 2 Gew.-%.

15. Verfahren zum Verschließen eines Bruchs einer Bohrlochwandung, umfassend: Zuführen des Bohrfluids gemäß Anspruch 13 oder 14 zu einer Formation bei einem Bohrprozess, so dass das Bohrfluid in den Bruch der Bohrlochwandung eindringt und den Bruch der Bohrlochwandung verstopft;
worin bevorzugt die Breite des Bruchs der Bohrlochwandung nicht größer als 100 $\mu$m, bevorzugt nicht größer als 60 $\mu$m ist.

**Revendications**

1. Matériau composite comprenant une matrice polymère et des ions métalliques incorporés dans la matrice polymère, dans lequel un taux d'incorporation des ions métalliques n'est pas inférieur à 90 % en poids, et une turbidité d'une solution aqueuse du matériau composite avec une concentration allant de 0,1 % en poids à 10 % en poids n'est pas inférieure à 1000 NTU dans une condition de pH $\leq$ 8 ;

la matrice polymère est sélectionnée parmi au moins deux composés parmi une substance polysaccharidique, un composé de type cryptand et un polyol polyéther ;
les ions métalliques sont sélectionnés parmi au moins deux groupes d'ions parmi des ions d'aluminium, des ions de fer, des ions de titane et des ions de zirconium ; et

dans lequel le taux d'incorporation des ions métalliques est obtenu en utilisant un procédé de spectroscopie de photoélectrons par rayons X (XPS) pour mesurer un poids $M_1$ des ions métalliques à 0-3 nm sur une surface de la matrice polymère, puis en mesurant un poids total $M_0$ des ions métalliques dans le matériau composite par un spectromètre à plasma à couplage inductif (ICP), et ensuite en effectuant un calcul selon une formule : taux d'incorporation = $(M_0-M_1)/M_0 \times 100$ %.

2. Matériau composite selon la revendication 1, dans lequel le taux d'incorporation des ions métalliques n'est pas inférieur à 95 % en poids, de préférence allant de 98 % en poids à 100 % en poids.

3. Matériau composite selon la revendication 1 ou la revendication 2, dans lequel une solubilité du matériau composite dans l'eau n'est pas inférieure à 0,1 g/100g, de préférence allant de 0,1 g/100g à 10 g/100g.

4. Matériau composite selon l'une quelconque des revendications 1 à 3, dans lequel, dans une condition dans laquelle le pH d'une solution aqueuse d'un matériau composite avec une concentration allant de 0,1 % en poids à 10 % en poids est ajusté de 9 à 8, la turbidité de la solution aqueuse du matériau composite n'est pas inférieure à 1000 NTU, et une taille de particule moyenne de particules solides dans la solution aqueuse augmente de 20 % à 60 % ; et
de préférence, dans une condition dans laquelle le pH de la solution aqueuse du matériau composite avec une concentration allant de 0,1 % en poids à 10 % en poids est ajusté de 8 à 6, la turbidité de la solution aqueuse du matériau composite n'est pas inférieure à 2000 NTU, et la taille de particule moyenne des particules solides dans la solution aqueuse augmente de 200 % à 300 %.

5. Matériau composite selon l'une quelconque des revendications 1 à 4, dans lequel les ions métalliques et la matrice polymère sont reliés par une liaison de coordination ou par une liaison de coordination et une reconnaissance moléculaire.

6. Matériau composite selon l'une quelconque des revendications 1 à 5, dans lequel une température de décomposition thermique du matériau composite n'est pas inférieure à 150°C, de préférence n'est pas inférieure à 180°C.

7. Matériau composite selon l'une quelconque des revendications 1 à 6, dans lequel une teneur des ions métalliques est dans une plage allant de 20 % en poids à 80 % en poids, de préférence de 40 % en poids à 75 % en poids, du matériau composite.

8. Matériau composite selon l'une quelconque des revendications 1 à 7, dans lequel la matrice polymère est sélectionnée parmi au moins un composé parmi le composé de type cryptand, la substance polysaccharidique et le polyol polyéther ;
de préférence, dans la matrice polymère, un rapport en poids du cryptand sur le polyol polyéther sur la substance polysaccharidique est de 1:(0,2-1,2):(0,2-1,2).

9. Matériau composite selon la revendication 8, dans lequel la substance polysaccharidique est sélectionnée parmi l'amidon modifié et/ou la cellulose modifiée ;

et/ou, le composé de type cryptand est sélectionné parmi au moins un composé parmi l'éther couronne, la cyclodextrine et le calixarène ;
et/ou, un poids moléculaire moyen en nombre du polyol polyéther est dans une plage allant de 200 à 100000 ;
et/ou, le polyol polyéther est sélectionné parmi au moins un composé parmi le polyéthylène glycol, le polypropylène glycol, le glycol copolymère d'oxyde de tétrahydrofurane-propylène, le polyéther de triméthylolpropane, le glycol d'oxyde de polypropylène, le triol polyoxypropylène, et le glycol polytétrahydrofurane.

10. Matériau composite selon l'une quelconque des revendications 1 à 9, dans lequel, sur la base d'une quantité totale des ions métalliques, une teneur de chaque ion métallique indépendamment est dans une plage allant de 20 % en poids à 80 % en poids, de préférence de 33 % en poids à 66 % en poids respectivement.

11. Composition comprenant le matériau composite selon l'une quelconque des revendications 1 à 10 et une résine soluble dans l'huile.

12. Composition selon la revendication 11, dans laquelle, dans la composition, par rapport à 100 parties en poids de matrice polymère, 3 à 20 parties en poids, de préférence 8 à 15 parties en poids de résine soluble dans l'huile sont prévues ;

et/ou, la résine soluble dans l'huile est sélectionnée parmi au moins une résine parmi une résine pétrolière, une résine phénolique, une résine coumarone, une résine terpénique, un polycarbonate, le polyéthylène téréphtalate, le polypropylène et le polystyrène ;

de préférence, la résine soluble dans l'huile est sélectionnée parmi au moins une résine parmi une résine pétrolière C5, une résine pétrolière C9, une résine coumarone et une résine de polypropylène.

13. Fluide de forage comprenant le matériau composite selon l'une quelconque des revendications 1 à 10 ou la composition selon la revendication 11 ou la revendication 12 ;

de préférence, le matériau composite ou la composition sert en tant que matériau de stabilisation de paroi de puits.

14. Fluide de forage selon la revendication 13, dans lequel, sur la base d'une masse totale du fluide de forage, une teneur du matériau de stabilisation de paroi de puits est dans une plage allant de 0,1 % en poids à 5 % en poids, de préférence de 0,5 % en poids à 2 % en poids.

15. Procédé d'obturation de fracture de paroi de puits de formation comprenant : une alimentation du fluide de forage selon la revendication 13 ou la revendication 14 dans une formation dans un procédé de forage, de sorte que le fluide de forage pénètre dans la fracture de paroi de puits de formation et obture la fracture de paroi de puits de formation ;

de préférence, une largeur de la fracture de paroi de puits de formation n'est pas supérieure à 100 $\mu$m, de préférence n'est pas supérieure à 60 $\mu$m.

Fig. 1

Fig. 2

Fig. 3

Fig. 4

Fig. 5

Fig. 6

Fig. 7

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111284866

- CN 106947439 A